(19) Europäisches Patentamt
European Patent Office
Office européen des brevets

(11) EP 1 064 244 B1

(12) **FASCICULE DE BREVET EUROPEEN**

(45) Date de publication et mention de la délivrance du brevet:
**09.07.2003 Bulletin 2003/28**

(21) Numéro de dépôt: **99907706.8**

(22) Date de dépôt: **15.03.1999**

(51) Int Cl.[7]: **C07B 57/00**, C07F 9/6568, C07F 15/00, B01J 31/28, C07B 53/00 // C07M7:00

(86) Numéro de dépôt international:
**PCT/FR99/00570**

(87) Numéro de publication internationale:
**WO 99/047475 (23.09.1999 Gazette 1999/38)**

(54) **PROCEDE DE SEPARATION DE DIASTEREOISOMERES D'UNE DIPHOSPHINE**

VERFAHREN ZUR DIASTEREOISOMEREN-SPALTUNG EINES PHOSPHINS

METHOD FOR SEPARATING A DIPHOSPHINE DIASTEREOISOMERS

(84) Etats contractants désignés:
**AT BE CH DE DK ES FI FR GB IE IT LI NL PT SE**

(30) Priorité: **16.03.1998 FR 9803182**

(43) Date de publication de la demande:
**03.01.2001 Bulletin 2001/01**

(73) Titulaire: **RHODIA CHIMIE**
**92408 Courbevoie Cédex (FR)**

(72) Inventeurs:
- **SPAGNOL, Michel**
  **F-69330 Meyzieu (FR)**
- **MATHEY, François**
  **F-75004 Paris (FR)**
- **MERCIER, François**
  **F-78000 Versailles (FR)**
- **ROBIN, Frédéric**
  **F-92120 Montrouge (FR)**

(74) Mandataire: **Dutruc-Rosset, Marie-Claude et al**
**Rhodia Services,**
**Direction de la Propriété Industrielle,**
**40, rue de la Haie-Coq**
**93306 Aubervilliers Cedex (FR)**

(56) Documents cités:
**WO-A-96/20202** **WO-A-98/39345**

- **BEVIERRE M O ET AL: "Mechanism of the thermal tetramerization of phospholes" BULL. SOC. CHIM. FR. (BSCFAS,00378968);92; VOL.129 (1); PP.1-8, XP002083579 Ec. Polytech.;Lab. Chim. Phosphore Met. Transition; Palaiseau; 91128; Fr. (FR) cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a trait à un procédé de séparation de diastéréoisiomères *(d/l)* et *(méso)* de bis-[1-phospha-2,3-diphényl-4,5-diméthylnorbornadiène].

L'invention concerne également un procédé de préparation de diphosphines optiquement actives de bis-[1-phospha-2,3-diphényl-4,5-diméthylnorbomadiène].

Il a été décrit par F. Mathey et al, dans Bull. Soc. Chim. Fr. 129, pp.1-8 (1992) la préparation d'un mélange de diastéréoisomères de bis-[1-phospha-2,3-diphényl-4,5-diméthylnorbornadiène].

Le produit de départ de la synthèse de ceux-ci est le 1-phényl-3,4-diméthylphosphole (II) décrit par F. Mathey et al, dans Synthesis, 1983, pp. 983.

On commence par réaliser la préparation du 3,3',4,4'-tétraméthyl-1,1'-diphosphole (IV). A cet effet, on fait réagir le 1-phényl-3,4-diméthylphosphole (II) dans le THF, avec du lithium métal suivant la réaction suivante :

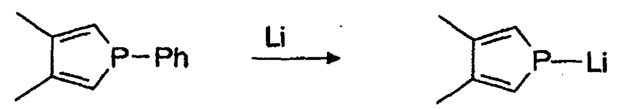


(II) (III)

On introduit en fin de réaction du chlorure d'aluminium pour piéger le phényllithium produit au cours de la réaction.

Dans une étape suivante, on réalise la dimérisation de (III) par action du diiode $I_2$ dans le THF. Pour plus de détails sur la préparation de (IV), on peut se reporter à l'article de F. Mathey et al, Organometallics, 1983, 2, 1234.

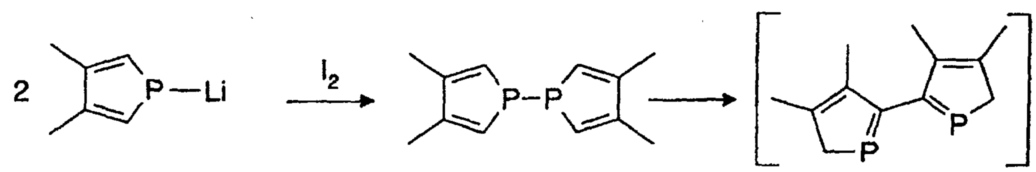


(III) (IV) (V)

Par chauffage vers 140°C, le composé (IV) se réarrange en (V) qui réagit avec le diphénylacétylène selon Diels-Adler, pour donner le bis-[1-phospha-2,3-diphényl-4,5-diméthylnorbornadiène].

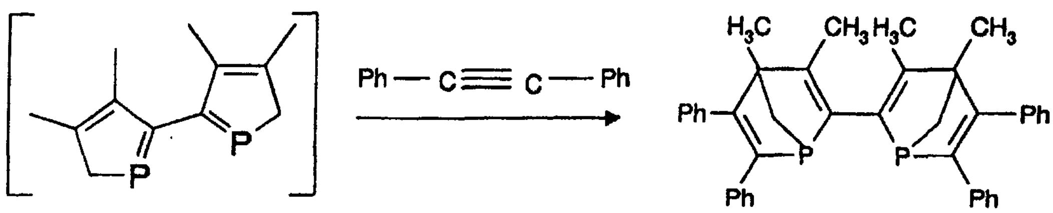

(V) (I)

Un mode de réalisation pratique est donné page 6 de la publication F. Mathey et al, dans Bull. Soc. Chim. Fr. 129, pp.1-8 (1992).

Toutefois, les auteurs ont obtenu comme mentionné page 3 colonne droite, lignes 7 et 8, un mélange de deux diastéréoisomères identifiés postérieurement par la demanderesse comme étant un méso (I m) - RS, SR - et un racémique (I r) - RR, SS - appelés respectivement dans l'article, (13b) et (13a).

La publication mentionne la séparation des deux diastéréoisomères par formation d'un chélate de palladium (II). Pour ce faire, il est décrit la séparation du mélange de diastéréoisomères obtenus, par réaction avec $PdCl_2(PhCN)_2$ dans le dichloroéthane conduisant à (VI m) et (VI r), la séparation par chromatographie sur silicagel suivie d'une élution, puis d'une décomplexation effectuée par NaCN.

On récupère donc séparément les deux diastéréoisomères, d'une part le méso (I m) et d'autre part le racémique (I r).

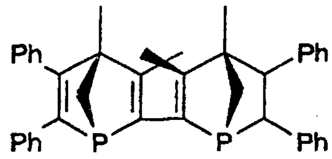
(Im)

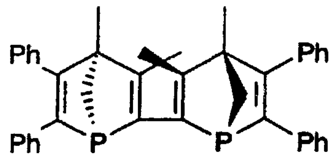
+
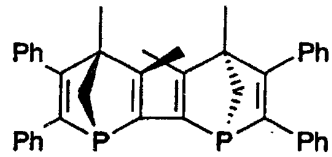
(Ir)

Le procédé décrit ci-dessus permet une séparation des diastéréoisomères mais il est difficilement en l'état actuel, utilisable à l'échelle industrielle car le complexe de palladium est cher.

L'objectif de la présente invention est de mettre à disposition un procédé plus économique de séparation des diastéréoisomères.

Il a été trouvé que les diastéréoisomères *(d/l)* et *(méso)* de bis-[1-phospha-2,3-diphényl-4,5-diméthylnorbornadiène] peuvent être séparés selon un procédé qui consiste à transformer le mélange de diastéréoisomères de bis-[1-phospha-2,3-diphényl-4,5-diméthylnorbornadiène], en un mélange de diastéréoisomères de dioxyde ou de disulfure de la diphosphine correspondante, puis à séparer les deux diastéréoisomères sous forme dioxyde ou disulfure.

Selon une première variante de l'invention, on effectue la séparation des diastéréoisomères de dioxyde de bis-[1-phospha-2,3-diphényl-4,5-diméthylnorbornadiène] obtenus en soumettant le mélange de diastéréoisomères de bis-[1-phospha-2,3-diphényl-4,5-diméthylnorbornadiène] à une réaction d'oxydation les transformant ainsi en dioxyde de bis-[1-phospha-2,3-diphényl-4,5-diméthylnorbornadiène].

Une autre variante de l'invention consiste à effectuer la séparation des diastéréoisomères de disulfure de bis-[1-phospha-2,3-diphényl-4,5-diméthylnorbornadiène] obtenus en faisant réagir le mélange de diastéréoisomères de bis-[1-phospha-2,3-diphényl-4,5-diméthylnorbornadiène] avec le soufre conduisant à un mélange de diastéréoisomères de disulfure de bis-[1-phospha-2,3-diphényl-4,5-diméthylnorbornadiène].

*<u>Dioxydes de diphosphines sous forme méso ou racémique.</u>*

Un autre objet de l'invention réside dans les dioxydes de bis-[1-phospha-2,3-diphényl-4,5-diméthylnorbornadiène] sous forme méso et racémique ainsi que leur procédé d'obtention.

Selon une première opération, on transforme les diastéréoisomères sous forme d'oxyde.

Ils peuvent être symbolisés par la formule suivante :

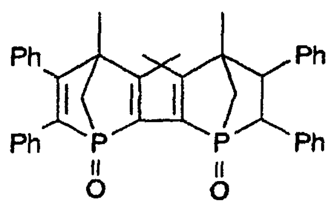
(IX)

Les oxydes de diphosphines de formule (IX) sont obtenus par oxydation des deux diastéréoisomères de formule (Im) et (Ir) à l'aide d'un agent oxydant.

Bien que l'on puisse utiliser n'importe quel type d'agents oxydants, un oxydant chimique, par exemple le permanganate de potassuim ou bien l'oxygène moléculaire ou un gaz en contenant, on préfère faire appel au peroxyde d'hydrogène, de préférence, sous forme de solution aqueuse.

La concentration de la solution de peroxyde d'hydrogène est avantageusement comprise entre 10 % et 35 % en poids.

La quantité d'agent oxydant mise en oeuvre peut varier largement de la quantité stoechiométrique jusqu'à un excès représentant par exemple 20 fois la stoechiométrie.

On fait appel à un solvant organique qui solubilise tous les réactifs. Le solvant peut être choisi parmi les

hydrocarbures aliphatiques, cycloaliphatiques ou aromatiques, de préférence, aromatiques. Des exemples sont donnés ci-dessus.

Parmi tous ces solvants, le toluène et les xylènes sont préférés.

La concentration de la diphosphine dans le solvant réactionnel est de préférence, entre 0,05 et 1 mole/litre et encore plus particulièrement entre 0,05 et 0,2 mole/litre.

On met donc en contact les diastéréoisomères dissous généralement dans un solvant adéquate, en contact avec l'agent oxydant.

La réaction est conduite avantageusement entre 50°C et 100°C.

La durée de la réaction se situe généralement entre 30 min et 4 h.

On récupère les oxydes de diphosphine dans la phase organique.

On sépare les phases aqueuse et organique.

On effectue un traitement classique des phases.

Ainsi, la phase aqueuse est lavée plusieurs fois (de 1 à 3) par un solvant organique d'extraction des oxydes de diphosphine, par exemple l'éther éthylique.

On regroupe toutes les phases organiques et on les lave avec une saumure (solution saturée de chlorure de sodium) puis l'on effectue préférentiellement une opération de séchage habituel, sur desséchant par exemple sulfate de sodium ou de magnésium.

Dans une étape suivante, on sépare les oxydes des deux diastéréoisomères.

On concentre par évaporation le solvant puis l'on effectue la séparation d'une manière connue [A. Bertheillier - Dunod Paris (1972)] par chromatographie liquide sur colonne, avec, de préférence un support en silice.

On élue la colonne avec un mélange de solvants appropriés.

On détermine les solvants convenant pour la séparation, par de simples opérations d'exécution pour l'Homme du Métier qui consiste à effectuer une chromatographie sur plaque de silice.

Les solvants sont généralement choisis parmi l'acétate d'éthyle, le méthanol, l'éther éthylique ou leurs mélanges.

Ainsi, selon les cas, on récupère dans un ordre variable, le dioxyde de diphosphine sous forme méso (IXm) et le dioxyde de diphosphine sous forme racémique (IXr), dans les solvants d'élution.

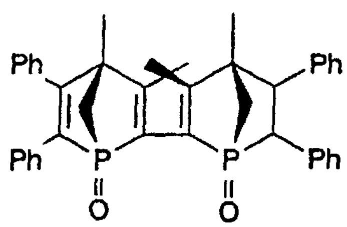

(IXm)

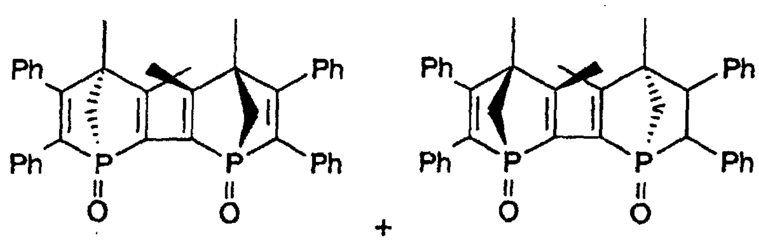

+

(IXr)

*Disulfures de diphosphines sous forme racémique ou méso.*

Un autre objet de l'invention réside dans les disulfures de bis-[1-phospha-2,3-diphényl-4,5-diméthylnorbornadiène] sous forme méso et racémique ainsi que leur procédé d'obtention.

Il a également été trouvé que les diastéréoisomères pouvaient être séparés selon un procédé qui consiste à faire réagir avec le soufre, le mélange de diastéréoisomères (Im) et (Ir), les transformant ainsi en disulfure de diphosphine (IX'm) et (IX'r) puis à séparer les disulfures de diphosphine des deux diastéréoisomères.

Selon une première opération, on transforme les diastéréoisomères sous forme de sulfure.

Ils peuvent être symbolisés par la formule suivante :

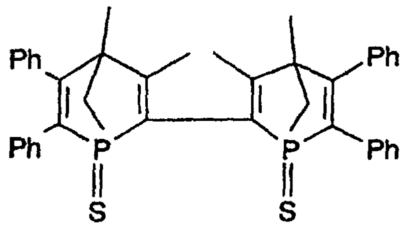

(IX')

Ainsi, on fait réagir le soufre ($S_8$) avec le mélange de deux diastéréoisomères sous forme méso (Im) et sous forme racémique (Ir) conduisant à un mélange de disulfures de diphosphines, sous forme méso ou racémique.

Généralement, la quantité de soufre mise en oeuvre définie par rapport à chaque atome de phosphore varie de la quantité stoechiométrique jusqu'à un léger excès de 10 %.

La réaction a lieu à une température allant de la température ambiante jusqu'à environ 100°C, de préférence, aux environs de 80°C, dans un solvant de type hydrocarbure aromatique, et notamment le toluène.

Dans une étape suivante, on sépare le mélange de diastéréoisomères sur colonne de silice comme précédemment décrit.

Ainsi, on récupère le disulfure de diphosphine sous forme méso (IX'm) et le disulfure de diphosphine sous forme racémique (IX'r) :

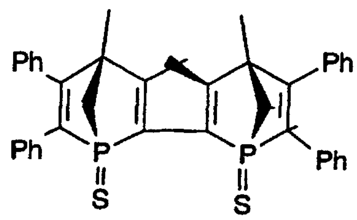

(IX'm)

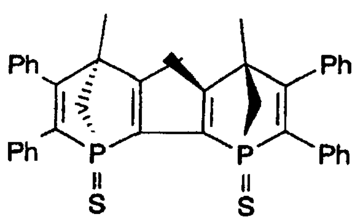

+

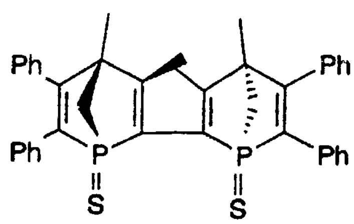

(IX'r)

*Diphosphines sous forme énantiomère.*

Un autre objet de la présente invention est le procédé de préparation de diphosphines optiquement actives de bis-[1-phospha-2,3-diphényl-4,5-diméthylnorbornadiène] répondant aux formules suivantes:

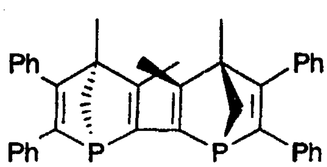

(Ia)

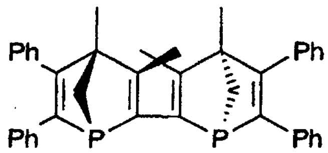

(Ib)

L'invention fournit donc un procédé de préparation de diphosphines, chirales sur le phosphore et non racémisables.

Une première variante pour obtenir une diphosphine optiquement active de formule (Ia) ou (Ib) consiste à effectuer le dédoublement du dioxyde de bis-[1-phospha-2,3-diphényl-4,5-diméthylnorbornadiène] sous forme racémique (IXr) puis à effectuer séparément la réduction des énantiomères de dioxyde de bis-[1-phospha-2,3-diphényl-4,5-diméthylnorbornadiène] obtenus (IXa) ou (IXb).

Une autre variante de l'invention consiste à effectuer d'abord la réduction du dioxyde de bis-[1-phospha-2,3-diphényl-4,5-diméthylnorbornadiène] sous forme racémique (IXr) en bis-[1-phospha-2,3-diphényl-4,5-diméthylnorbornadiène] sous forme racémique (Ir), puis à effectuer le dédoublement du bis-[1-phospha-2,3-diphényl-4,5-diméthylnorbornadiène] sous forme racémique (Ir) en énantiomères (Ia) et (Ib).

Une autre variante de l'invention consiste à effectuer le dédoublement du mélange racémique de disulfure de bis-[1-phospha-2,3-diphényl-4,5-diméthylnorbornadiène] (IX'r) puis à réduire les énantiomères de disulfure de bis-[1-phospha-2,3-diphényl-4,5-diméthylnorbornadiène] (IX'a) et (IX'b) en énantiomères de bis-[1-phospha-2,3-diphényl-4,5-diméthylnorbornadiène] (Ia) et (Ib).

Une autre variante consiste à réduire le mélange racémique de disulfure de bis-[1-phospha-2,3-diphényl-4,5-diméthylnorbornadiène] (IX'r) en mélange racémique de bis-[1-phospha-2,3-diphényl-4,5-diméthylnorbornadiène] (Ir) puis à effectuer le dédoublement du mélange racémique de bis-[1-phospha-2,3-diphényl-4,5-diméthylnorbornadiène] en énantiomères (Ia) et (Ib).

Une autre variante de l'invention est de transformer le mélange racémique de disulfure de bis-[1-phospha-2,3-diphényl-4,5-diméthylnorbornadiène] (IX'r) en mélange racémique de dioxyde de bis-[1-phospha-2,3-diphényl-4,5-diméthylnorbornadiène] (IXr) et ensuite d'obtenir les diphosphines optiquement actives (Ia) et (Ib) selon les modes précédemment décrits.

_Enantiomères voie oxyde._

Selon un premier mode de réalisation de l'invention, on effectue le dédoublement du mélange racémique de dioxyde de bis-[1-phospha-2,3-diphényl-4,5-diméthylnorbornadiène] (IXr).

La résolution peut être effectuée par séparation des deux énantiomères, par chromatographie liquide chirale. On utilise une colonne chirale par exemple, Chiralcel OJ® [colonne d'ester de cellulose modifiée (cf. ref citée ci-après p.262)], Chirose C1 ou C3® (polymère réticulé greffé sur silice), Chirosebond C1 ou C3® (greffon de polymère chiral de type polyholoside sur silice sphérique 5 µm - 100 Å) et les solvants d'élution peuvent être notamment un mélange eau/acétonitrile.

La mise en oeuvre de la séparation est effectuée selon les techniques classiques du domaine considéré (cf. Stéréochimie des composés chimiques Ernest L. Eliel et al Technique et Documentation 1996, p. 249-250).

Ainsi, on obtient deux énantiomères:

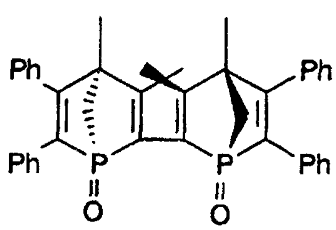

(IXa)

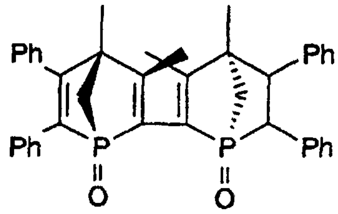

(IXb)

Dans une étape suivante, on réduit les dioxydes de bis-[1-phospha-2,3-diphényl-4,5-diméthylnorbornadiène] optiquement actifs de formule (IXa) ou (IXb). On peut se référer à la description de l'opération de réduction donnée ci-après.

Une autre variante consiste d'abord à effectuer la réduction du dioxyde de bis-[1-phospha-2,3-diphényl-4,5-diméthylnorbornadiène] sous forme racémique puis à effectuer le dédoublement de la diphosphine sous forme racémique, obtenue.

La réduction peut être conduite avec un réducteur tel que par exemple, le trichlorosilane, l'hexachlorodisilazane, le phényltrisilane, un hydrure notamment $LiAlH_4$ ou $NaBH_4$.

La quantité d'agent réducteur mise en oeuvre peut varier largement de la quantité stoechiométrique jusqu'à un excès représentant par exemple 20 fois la stoechiométrie.

Lorsque l'on fait appel à un agent réducteur qui conduit à la libération d'un acide halogéné, par exemple le trichlorosilane ou l'hexachlorodisilazane, on ajoute une base, de préférence une amine afin qu'elle piège l'acide halogéné (chlorhydrique) libéré.

Comme exemples plus particuliers, on peut citer les picolines, la pyridine, la 2-éthylpyridine, la 4-éthylpyridine, la 2-méthylpyridine, la 4-méthylpyridine, la 2,6-diméthylpyridine, l'imidazole, la 1-méthylimidazole, la TMEDA (trétraméthylènediamine), la N-méthylpyrrolidine, la 4-méthylmorpholine, la triéthylamine, la DBU (1,8-diazabicyclo[5.4;0.] undécène-7).

La quantité d'amine est au moins égale à la quantité nécessaire pour piéger l'acide halogéné libéré et est plus souvent en excès pouvant aller jusqu'à 3 fois la quantité stoechiométrique.

On conduit la réaction dans un solvant organique qui solubilise tous les réactifs. Le solvant peut être choisi parmi les hydrocarbures aliphatiques, aromatiques, halogénés ou non.

Parmi tous ces solvants, le toluène et le dichlorométhane sont préférés.

La concentration de la diphosphine dans le solvant réactionnel est de préférence, entre 0,05 et 1 mole/litre et encore plus particulièrement entre 0,05 et 0,2 mole/litre.

D'un point de vue pratique, le plus souvent, dans un mélange de solvants, et en présence d'une amine, on ajoute le composé racémique, sous forme d'oxydes, puis l'agent de réduction.

La réaction est conduite avantageusement entre 50°C et 100°C.

La durée de la réaction se situe généralement entre 30 min et 4 h.

Le mélange racémique est en phase organique.

Il est parfois nécessaire de faire un traitement basique dans le cas où l'agent réducteur est en excès afin de le détruire.

Après refroidissement, on ajoute ensuite une base, de préférence, la soude, la potasse ou le carbonate de sodium, jusqu'à obtention d'un pH basique (pH d'au moins 8). On fait appel de préférence, à une solution aqueuse basique, de préférence, une solution de soude ayant une concentration de 10 % à 30 %.

On sépare les phases aqueuse et organique.

On récupère les énantiomères de diphosphines dans la phase organique que l'on soumet au traitement classique décrit précédemment, extraction au solvant, lavage à la saumure et éventuellement séchage.

On obtient un mélange racémique de deux énantiomères que l'on peut ensuite séparer.

On peut effectuer le dédoublement du mélange racémique de bis-[1-phospha-2,3-diphényl-4,5-diméthylnorbornadiène] selon le procédé décrit dans **FR 2728903** et **WO 96/20202,** en faisant réagir le mélange racémique avec un complexe de palladium et/ou de platine, comme auxiliaire chiral formant ainsi des complexes diastéréoisomères, puis à dédoubler lesdits complexes optiquement purs.

On peut faire appel à un complexe de palladium. Ce type d'auxiliaire chiral est largement décrit dans la littérature, notamment par Sei Otsuka et al, dans Journal of the American Chemical Society 93, pp. 4301 (1971).

On peut également faire appel à un complexe de platine et l'on peut se référer plus particulièrement aux travaux de A. C. Cope [Journal of the American Chemical Society 90, pp. 909 (1968)].

Le complexe chiral mis en oeuvre répond plus particulièrement à la formule générale (VII) :

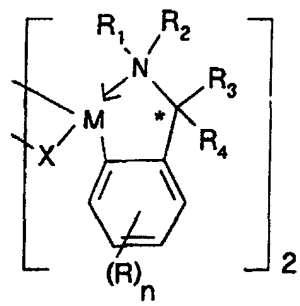

(VII)

dans ladite formule :

- M représente le palladium et/ou le platine,
- $R_1$, $R_2$, $R_3$ et $R_4$ représentent un atome d'hydrogène ou un radical alkyle ayant de 1 à 10 atomes de carbone ou un radical cycloalkyle ayant de 3 à 10 atomes de carbone,
- $R_3$ et $R_4$ sont différents et au moins l'un des deux représente un atome d'hydrogène,
- R a la signification donnée pour $R_1$, $R_2$, $R_3$ et $R_4$,
- X représente un atome d'halogène,
- n est un nombre de 0 à 4,
- lorsque n est supérieur à 1, deux radicaux R et les 2 atomes successifs du cycle benzénique peuvent former entre eux, un cycle ayant de 5 à 7 atomes de carbone.

Plus préférentiellement, le complexe mis en oeuvre répond à la formule précitée dans laquelle $R_1$, $R_2$, $R_3$ et $R_4$ représentent un atome d'hydrogène ou un radical méthyle, X représente un atome de chlore et n est égal à 0.

Lorsque n est égal à 2, deux radicaux R forment un cycle benzénique.

Comme exemples plus spécifiques de complexes de palladium convenant à la présente invention obtenus indifféremment à partir de (R)-(+) ou (S)-(-)-N,N-diméthylphényléthylamine, on peut mentionner :

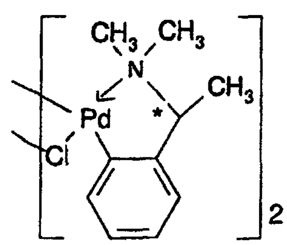

(VII')

La quantité de complexe des métaux précités exprimée en métal est généralement de 0,5 à 1 atome de métal par atome de phosphore.

On fait appel à un solvant organique qui solubilise tous les réactifs. Le solvant doit être inerte vis-à-vis de la diphosphine.

A titre d'exemples non limitatifs de solvants convenant dans le procédé de l'invention, on peut citer :

- les hydrocarbures aliphatiques et plus particulièrement les paraffines tels que notamment, le pentane, l'hexane, l'heptane, l'octane, l'isooctane, le nonane, le décane, l'undécane, le tétradécane, l'éther de pétrole et le cyclohexane ; les hydrocarbures aromatiques comme notamment le benzène, le toluène, les xylènes, l'éthylbenzène, les diéthylbenzènes, les triméthylbenzènes, le cumène, le pseudocumène, les coupes pétrolières constituées d'un mélange d'alkylbenzènes notamment les coupes de type Solvesso®,
- les hydrocarbures halogénés aliphatiques ou aromatiques, et l'on peut mentionner : les hydrocarbures perchlorés tels que notamment le trichlorométhane, le tétrachloroéthylène ; les hydrocarbures partiellement chlorés tels que le dichlorométhane, le dichloroéthane, le tétrachloroéthane, le trichloroéthylène, le 1-chlorobutane, le 1,2-dichlorobutane ; le monochlorobenzène, le 1,2-dichlorobenzène, le 1,3-dichlorobenzène, le 1,4-dichlorobenzène ou des mélanges de différents chlorobenzènes.

Parmi tous ces solvants, le benzène et le toluène sont préférés.

La concentration de la diphosphine dans le solvant réactionnel est de préférence, entre 0,05 et 1 mole/litre et encore plus particulièrement entre 0,05 et 0,2 mole/litre.

La séparation est avantageusement conduite à température ambiante généralement comprise entre 15°C et 25°C.

Elle a lieu de préférence sous atmosphère contrôlée de gaz inertes. On peut établir une atmosphère de gaz rares, de préférence l'argon mais il est plus économique de faire appel à l'azote.

On obtient un mélange de complexes de palladium ou platine et de diphosphine correspondant à chaque énantiomère.

Ils répondent plus particulièrement aux formules suivantes :

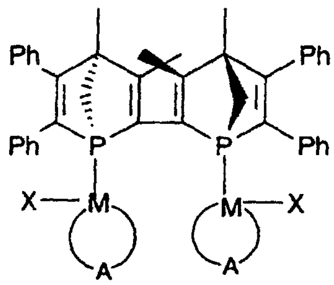

(VIII a)

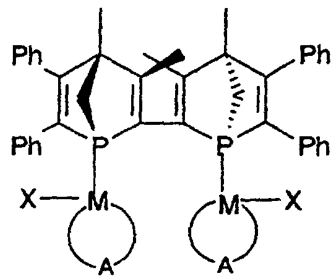

(VIII b)

dans lesdites formules, M représente le palladium ou le platine, X un atome d'halogène, de préférence, le chlore et A symbolise le reste d'un complexe métallique chiral répondant à l'une des formules (VII) et préférentiellement (VII').

Dans une étape suivante, on récupère les deux énantiomères purs.

On concentre par évaporation le solvant puis on effectue la séparation d'une manière connue [A. Bertheillier - Dunod Paris (1972)] par chromatographie liquide sur colonne, avec, de préférence un support en silice.

On élue la colonne avec un mélange de solvants appropriés, de préférence, un mélange toluène/acétate d'éthyle comprenant préférentiellement, 80 % en volume de toluène et 20 % en volume d'acétate d'éthyle.

On récupère les deux énantiomères isolés, purs, sous forme de deux complexes diastéréoisomères ayant les caractéristiques suivantes :

$$RMN^{31}\ p = \delta(CH_2Cl_2) = 55{,}9\ ppm$$

$$RMN^{31}P = \delta(CH_2Cl_2) = 53{,}6\ ppm$$

On récupère les deux énantiomères de la diphosphine purs en effectuant la décomplexation.

A cet effet, on utilise notamment un sel de l'acide cyanhydrique, de préférence, un sel alcalin et encore plus préférentiellement le sodium : ledit sel étant mis en solution dans le minimum d'eau nécessaire.

On solubilise les complexes dans un solvant organique tel que, par exemple, le dichlorométhane, puis l'on introduit sous agitation, le sel de l'acide cyanhydrique mis en oeuvre généralement en excès représentant de 2 à 5 moles par atome de métal.

L'opération est également conduite sous atmosphère contrôlée et à température ambiante.

On récupère l'énantiomère dans la phase organique qui est séparée, lavée à l'eau et séchée, par exemple sur sulfate de sodium.

On obtient les deux énantiomères du bis-[1-phospha-2,3-diphényl-4,5-diméthylnorbornadiène], isolés purs répondant aux formules [(Ia) - (S,S) (+)] et [(Ib) - (R,R) (-)] précitées, dont les caractéristiques sont les suivantes :

$$RMN^{31}\ P = \delta(CDCl_3) = -\ 13{,}2\ ppm\ -\ [\alpha]_D = +\ 231°\ (c = 1,\ C_6D_6).$$

$$RMN^{31}\ P = \delta(CDCl_3) = -\ 13{,}2\ ppm\ -\ [\alpha]_D = -\ 198°\ (c = 1,\ C_6D_6)$$

(avec un $[\alpha]_D$ déterminé pour une concentration de 10 mg/ml et à température ambiante).

*Enantiomères voie sulfure.*

Lorsque les diphosphines optiquement actives sont préparées selon une voie sulfure, on effectue le dédoublement du mélange racémique de disulfure de bis-[1-phospha-2,3-diphényl-4,5-diméthylnorbornadiène] (IX'r) sur colonne chirale permettant d'obtenir les disulfures de bis-[1-phospha-2,3-diphényl-4,5-diméthylnorbornadiène] optiquement actifs (IX'a) et (IX'b), puis on les réduit en disphosphines conduisant ainsi aux diphosphines optiquement actives (Ia) et (Ib).

La réduction des disulfures de diphosphines se fait par réaction avec un réactif phosphoré de type $PBu_3$ ou $P(CH_2CH_2CN)_3$: la réaction étant conduite en milieu solvant organique, par exemple un hydrocarbure aromatique, de préférence, le toluène.

La réaction est effectuée généralement à la température de reflux du solvant réactionnel.

Ainsi, on obtient deux énantiomères :

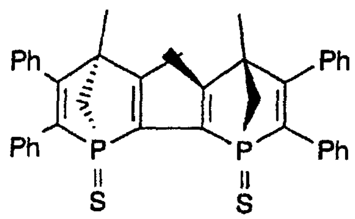

(IX'a)

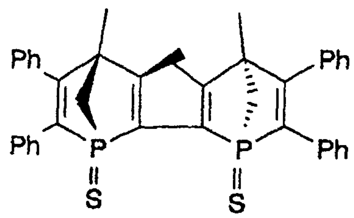

(IX'b)

Une autre variante consiste à réduire le mélange racémique de disulfures de bis-[1-phospha-2,3-diphényl-4,5-diméthylnorbornadiène] (IX'r) en mélange racémique de bis-[1-phospha-2,3-diphényl-4,5-diméthylnorbornadiène] (Ir) puis à effectuer le dédoublement du mélange racémique de bis-[1-phospha-2,3-diphényl-4,5-diméthylnorbornadiène] en phosphines optiquement actives (Ia) et (Ib).

La réduction du mélange racémique de disulfures de diphosphines est conduite de la manière telle que précisée pour les disulfures de diphosphines optiquement actifs.

Enfin, une autre variante de l'invention consiste à transformer le mélange racémique de disulfures de bis-[1-phospha-2,3-diphényl-4,5-diméthylnorbornadiène] en mélange racémique de dioxydes de bis-[1-phospha-2,3-diphényl-4,5-diméthylnorbornadiène] puis à obtenir les diphosphines optiquement actives (Ia) et (Ib) selon les voies mentionnées ci-dessus.

Il est possible de transformer les disulfures de diphosphines, en dioxydes de diphosphines, par tout moyen approprié, en particulier par réaction des disulfures de diphosphines avec l'oxyde de cyclohexène, dans l'acide trifluoroacétique et en milieu solvant organique, en particulier dans un hydrocarbure aliphatique halogéné, de préférence, le chlorure de méthylène.

On obtient le mélange racémique (IXr) qui est traité comme précédemment mentionné.

Les diphosphines optiquement actives obtenues selon le procédé de l'invention présentent un intérêt tout particulier en chimie organique, dans des procédés de synthèse asymétrique.

Les diphosphines optiquement actives selon l'invention peuvent être utilisées pour la préparation de complexes métalliques, permettant l'hydrogénation asymétrique de dérivés insaturés.

Plus particulièrement, elles peuvent être utilisées pour réaliser des réactions d'hydrogénation asymétrique.

Les diphosphines optiquement actives selon l'invention peuvent être utilisées pour la préparation de complexes métalliques, permettant l'hydrogénation asymétrique notamment d'acides carboxyliques $\alpha$-$\beta$ insaturés et/ou dérivés et de composés cétoniques.

Les diphosphines optiquement actives de formule (Ia) ou (Ib) servent de ligands dans la formation de coordinats complexes avec des métaux de transition.

Comme exemples de métaux de transition capables de former des complexes, on peut citer notamment les métaux tels le rhodium, le ruthénium, le rhénium, l'iridium, le cobalt, le nickel, le platine, le palladium.

Parmi les métaux précités, le rhodium, le ruthénium et l'iridium sont préférés.
Des exemples spécifiques desdits complexes de la présente invention sont donnés ci-après, sans caractère limitatif.
Dans lesdites formules, (P*P) représente la diphosphine de formule (Ia) ou (Ib).
Les complexes de rhodium et d'iridium peuvent être représentés par les formules suivantes :

$$[M\ L_2(P{*}P)]\ Y \qquad (XIVa)$$

$$[M\ L_2(P{*}P)]\ Y \qquad (XIVb)$$

dans lesdites formules :

- (P*P) représente dans la formule (XIVa) la diphosphine de formule (Ia) et dans la formule (XIVb) la diphosphine de formule (Ib),
- M représente le rhodium ou l'iridium,
- Y représente un ligand anionique coordinant,
- L représente un ligand neutre.

Les complexes préférés de rhodium ou d'iridium répondent à la formule (XIVa) ou (XIVb) dans laquelle :

- L représente une oléfine ayant de 2 à 12 atomes de carbone et deux ligands L peuvent être liés entre eux pour former une chaîne hydrocarbonée polyinsaturée, linéaire ou cyclique ; L représentant de préférence, le 1,5-cyclooctadiène, le norbornadiène, l'éthylène,
- Y représente un anion $PF_6^-$, $PCl_6^-$, $BF_4^-$, $BCl_4^-$, $SbF_6^-$, $SbCl_6^-$, $BPh_4^-$, $ClO_4^-$, $CN^-$, $CF_3SO_3^-$, halogène de préférence, $Cl^-$ ou $Br^-$, un anion 1,3-dicétonate, alkylcarboxylate, haloalkylcarboxylate avec un radical alkyle inférieure, un anion phénylcarboxylate ou phénolate dont le cycle benzénique peut être substitué par des radicaux alkyle inférieurs et/ou des atomes d'halogène.

Par radicaux alkyle inférieurs, on entend généralement un radical alkyle linéaire ou ramifié ayant de 1 à 4 atomes de carbone.
D'autres complexes d'iridium peuvent être représentés par les formules :

$$[Ir\ L(P{*}P)]\ Y \qquad (XVa)$$

$$[Ir\ L\ (P{*}P)]\ Y \qquad (XVb)$$

dans lesdites formules, (P*P), L et Y ayant les significations données pour les formules (XIVa) et (XIVb).
Pour ce qui . est des complexes de ruthénium, ils répondent préférentiellement aux formules suivantes :

$$[RuY_1Y_2(P{*}P)] \qquad (XVIa)$$

$$[RuY_1Y_2(P{*}P)] \qquad (XVIb)$$

dans lesdites formules :

- (P*P) représente dans la formule (XVIa) la diphosphine de formule (Ia) et dans la formule (XVIb) la diphosphine de formule (Ib),
- $Y_1$ et $Y_2$, identiques ou différents, représentent de préférence, un anion $PF_6^-$, $PCl_6^-$, $BF_4^-$, $BCl_4^-$, $SbF_6^-$, $SbCl_6^-$, $BPh_4^-$, $ClO_4^-$, $CF_3SO_3^-$, un atome d'halogène, plus particulièrement, chlore ou brome ou un anion carboxylate, préférentiellement, acétate, trifluoroacétate.

D'autres complexes du ruthénium susceptibles d'être mis en oeuvre dans la procédé de l'invention répondent aux formules ci-après :

$$[RuY_1Ar(P^*P)Y_2] \quad (XVIc)$$

$$[RuY_1Ar(P^*P)Y_2] \quad (XVId)$$

dans lesdites formules :

- (P*P) représente dans la formule (XVIc) la diphosphine de formule (Ia) et dans la formule (XVId) la diphosphine de formule (Ib),
- Ar représente le benzène, le p-méthylisopropylbenzène, l'hexaméthylbenzène,
- $Y_1$ représente un atome d'halogène, de préférence, chlore ou brome,
- $Y_2$ représente un anion de préférence, un anion $PF_6^-$, $PCl_6^-$, $BF_4^-$, $BCl_4^-$, $SbF_6^-$, $SbCl_6^-$, $BPh_4^-$, $ClO_4^-$, $CF_3SO_3^-$.

Il est également possible de mettre en oeuvre dans le procédé de l'invention des complexes à base de palladium et de platine.

Comme exemples plus spécifiques desdits complexes, on peut mentionner entre autres $PdCl_2(P^*P)$ et $PtCl_2(P^*P)$ dans lesquels (P*P) représente la diphosphine de formule (Ia) ou (Ib).

Les complexes comprenant la diphosphine précitée et le métal de transition peuvent être préparés selon les procédés connus décrits dans la littérature.

Pour la préparation des complexes de ruthénium, on peut se référer notamment à la publication de J.-P. Genêt [Acros Organics Acta, 1, Nr. 1, pp. 1-8 (1994)] et pour les autres complexes, à l'article de Schrock R. et Osborn J.A. [Journal of the American Chemical Society, 93, pp. 2397 (1971)].

Ils peuvent être préparés en particulier par réaction de la diphosphine de formule (Ia) ou (Ib) avec le composé de métal de transition, dans un solvant organique approprié.

La réaction est conduite à une température comprise entre la température ambiante (de 15 à 25°C) et la température de reflux du solvant réactionnel.

Comme exemples de solvants organiques, on peut mentionner entre autres, les hydrocarbures aliphatiques, halogénés ou non et plus particulièrement, l'hexane, l'heptane, l'isooctane, le décane, le benzène, le toluène, le chlorure de méthylène, le chloroforme ; des solvants de type éther ou acétone et notamment le diéthyléther, le tétrahydrofurane, l'acétone, la méthyléthylcétone ; les solvants de type alcool, de préférence, le méthanol ou l'éthanol.

Les complexes métalliques selon l'invention, récupérés selon les techniques classiques (filtration ou cristallisation) sont utilisés dans des réactions d'hydrogénation asymétrique de substrats précisés dans **WO 96/20202** et dans **WO 98/00375.**

L'acide carboxylique $\alpha,\beta$-insaturé et/ou ses dérivés répond plus particulièrement à la formule (X) :

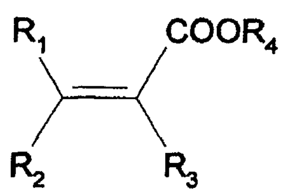

(X)

dans ladite formule (X) :

- $R_1$, $R_2$, $R_3$ et $R_4$, représentent un atome d'hydrogène ou n'importe quel groupe hydrocarboné, dans la mesure où :

  . si $R_1$ est différent de $R_2$ et différent d'un atome d'hydrogène alors $R_3$ peut être n'importe quel groupe hydrocarboné ou fonctionnel désigné par $\mathcal{R}$

  . si $R_1$ ou $R_2$ représente un atome d'hydrogène et si $R_1$ est différent de $R_2$, alors $R_3$ est différent d'un atome d'hydrogène et différent de $-COOR_4$,

  . si $R_1$ est identique à $R_2$ et représente n'importe quel groupe hydrocarboné ou fonctionnel désigné par $\mathcal{R}$ alors $R_3$ est différent de $-CH-(\mathcal{R})_2$ et différent de $-COOR_4$,

- l'un des groupes $R_1$, $R_2$ et $R_3$ pouvant représenter un groupe fonctionnel.

L'acide carboxylique α,β-insaturé et/ou dérivé répond préférentiellement à la formule (X) dans laquelle les radicaux $R_1$ à $R_4$ identiques ou différents représentent un radical hydrocarboné éventuellement substitué ayant de 1 à 20 atomes de carbone qui peut être un radical aliphatique acyclique saturé ou insaturé, linéaire ou ramifié ; un radical carbocyclique ou hétérocyclique saturé, insaturé ou aromatique, monocyclique ou polycyclique ; un radical aliphatique saturé ou insaturé, linéaire ou ramifié, porteur d'un substituant cyclique.

Comme exemples préférés d'acides carboxyliques mis en oeuvre, on peut citer un acide acrylique substitué précurseur d'un aminoacide, l'acide itaconique et/ou dérivé, un acide arylpropionique et/ou dérivé.

D'autres substrats susceptibles d'être hydrogénés sont les cétones et dérivés notamment les cétones simples, les cétones fonctionnalisées en position α, β, γ ou δ et dérivés (cétoacides, cétoesters, thioacides, thioesters), les composés dicétoniques présentant un groupe carbonyle en position α, β, γ ou δ, par rapport à un premier groupe carbonyle.

Les exemples suivants, donnés à titre non limitatif, illustrent la présente invention.

## EXEMPLES

### Exemple 1 :

### Préparation des dioxydes de diphosphine.

Dans un ballon de 250 ml muni d'un barreau aimanté, on dissout dans 100 ml de toluène, 4 g (6,92 mmol) d'un mélange de diastéréoisomères de bis-[1-phospha-2,3 diphényl-4,5-diméthylnorbornadiène] sous forme *méso* (Im) et racémique *d/l* (Ir) dans des proportions respectives de 25 *(d/l)* et 75 *(méso).*

Ce mélange est obtenu selon le mode opératoire donné dans la demande **WO 96/20202.**

On chauffe la solution obtenue à 80°C et on ajoute 9 ml d'une solution aqueuse de peroxyde d'hydrogène à 15 % en poids.

On maintient l'agitation et la température pendant 30 min.

Après refroidissement, on ajoute 100 ml d'eau et on laisse décanter les deux phases.

On lave la phase organique deux fois à l'eau, la phase aqueuse deux fois au dichlorométhane.

On réunit les différentes fractions organiques qui sont ensuite séchées sur sulfate de sodium.

Après évaporation, on soumet le résidu à une chromatographie sur gel de silice (granulométrie 0,060 mm) pour séparer ces deux produits à l'aide d'un éluant.

Le méso est récupéré en tête en éluant à l'aide d'acétate d'éthyle.

Le racémique est récupéré en second, avec un mélange acétate d'éthyle/méthanol 80/20 en volume.

On purifie séparément des deux oxydes par précipitation dans l'acétate d'éthyle.

On obtient 2,8 g de méso et 1,2 g de racémique (94 %).

RMN$^{31}$P = $\delta(CDCl_3)$ = 48,18 ppm - isomère minoritaire correspondant au méso.

RMN$^{31}$P = $\delta(CDCl_3)$ = 47,77 ppm - isomère majoritaire correspondant au racémique.

### Exemple 2

### Réduction des dioxydes de diphosphine en diphosphines.

Sous argon, dans un ballon de 100 ml muni d'un barreau aimanté, on dissout dans 40 ml d'un mélange 1,2-dichloroéthane/toluène 1/1 en volume, 1 g (1,96 mmol) du mélange racémique *(d/l)* obtenu selon l'exemple 1 et l'on y ajoute 2 ml de pyridine.

On additionne alors en dix minutes, goutte à goutte, et à température ambiante, une solution de 2 ml de $HSiCl_3$ (19,8 mmol, d = 1,342) dans 2 ml de toluène.

On chauffe à 80°C pendant 30 min.

Lorsque la réaction est terminée, on refroidit le milieu.

On ajoute alors une solution aqueuse de soude à 30 % jusqu'à ce que la solution soit basique.

On extrait la diphosphine (*d/l*) de manière classique par décantation, lavage à l'eau de la phase organique et lavage à l'éther de la phase aqueuse.

Les différentes fractions organiques sont réunies puis séchées sur sulfate de sodium.

Après évaporation du solvant, le résidu qui contient la phosphine est rapidement chromatographié sur gel de silice en éluant au dichlorométhane.

On récupère ainsi, après évaporation du solvant de chromatographie, la phosphine sous la forme d'une poudre

blanche.

On récupère 1,0 g ce qui correspond à un rendement de 88 %.

Exemple 3

Préparation des disulfures de diphosphine.

Dans un ballon de 250 ml muni d'un barreau aimanté, on dissout dans 50 ml de toluène, 2,9 g (5 mmol) d'un mélange de diastéréoisomères de bis-[1-phospha-2,3 diphényl-4,5-diméthylnorbornadiène] sous forme *méso* (Im) et racémique *d/l* (Ir) dans des proportions respectives de 25 *(d/l)* et 75 *(méso).*

Ce mélange est obtenu selon le mode opératoire donné dans la demande **WO 96/20202.**

On chauffe la solution obtenue à 80°C pendant 5 heures.

Après évaporation du toluène, on soumet le résidu à une chromatographie sur gel de silice pour séparer ces deux produits à l'aide d'un éluant, le dichlorométhane.

Le méso est récupéré en tête..

Le racémique est récupéré en second.

On obtient 2,2 g de méso (74 %) et 0,7 g de racémique (22 %).

$$RMN^{31}P = \delta(CDCl_3) = 51,6 \text{ et } 48,18 \text{ ppm - } J(A\text{-}B) = 9,7 \text{ Hz.}$$

$$RMN^{31}P = \delta(CDCl_3) = 49,6 \text{ ppm.}$$

Exemple 4

Oxydation des disulfures de diphosphine en dioxydes de diphosphine sous forme racémique (IXr).

Sous flux d'argon, on met en solution 0,7 g (1,1 mmol) du diastéréoisomère *d/l*, obtenu précédemment dans 10 ml de $CH_2Cl_2$, puis on ajoute 0,5 g de $CF_3COOH$ (4,4 mmol) et 0,4 g d'oxyde de cyclohexène (4,4 mmol).

On chauffe le mélange au reflux du solvant pendant 30 min.

On neutralise l'excès d'acide par une solution de carbonate de sodium puis on extrait la phase aqueuse à l'éther.

On rassemble les phases organiques et l'on sèche sur sulfate de magnésium anhydre.

On évapore le solvant.

On purifie le résidu par chromatographie sur gel de silice avec un mélange acétate d'éthyle/méthanol (90/10)

On obtient la dioxyde de diphosphine racémique.

On sépare ensuite les deux énantiomères après réduction du dioxyde de diphosphine racémique selon le même mode opératoire de l'exemple 2.

## Revendications

1. Procédé de séparation de diastéréoisomères d'une part le mélange racémique *(d/l)* et d'autre part le composé *(méso)* de bis-[1-phospha-2,3-diphényl-4,5-diméthylnorbornadiène] **caractérisé par le fait qu'**il consiste à transformer le mélange de diastéréoisomères de bis-[1-phospha-2,3-diphényl-4,5-diméthylnorbornadiène] comprenant :

   - le mélange racémique *(d/l)* répondant aux formules :

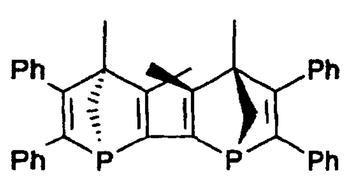

**(Ia)** et

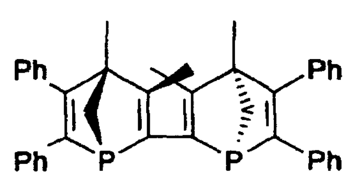

**(Ib)**

- et le composé (*méso*) répondant à la formule suivante :

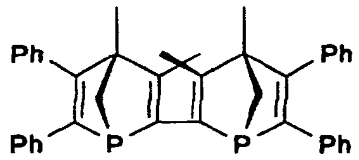

(Im)

en un mélange de diastéréoisomères de disulfure ou de dioxyde de la diphosphine correspondante,

- puis à séparer les deux diastéréoisomères sous forme dioxyde,

  . d'une part le composé sous forme *(méso)* de formule :

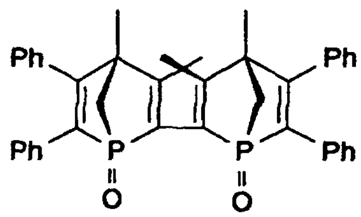

(IXm)

  . d'autre part le mélange racémique de formule :

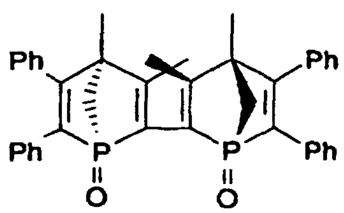

+

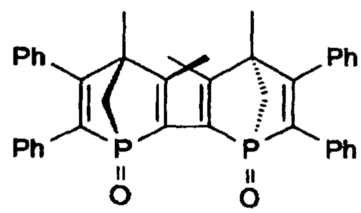

(IXr)

- ou à séparer les deux diastéréoisomères sous forme disulfure,

  . d'une part le composé sous forme méso de formule :

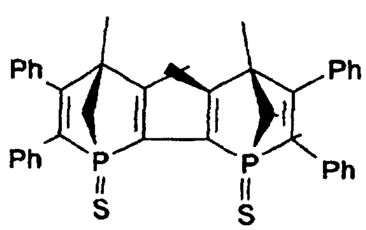

(IX'm)

  . d'autre part le mélange racémique de formule :

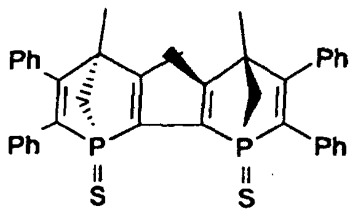

+

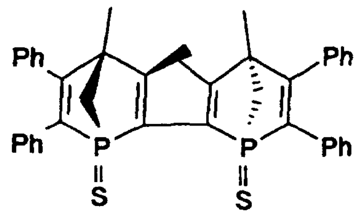

(IX'r)

2. Procédé selon la revendication 1 **caractérisé par le fait que** l'on effectue la séparation des diastéréoisomères de dioxyde de bis-[1-phospha-2,3-diphényl-4,5-diméthylnorbornadiène] obtenus en soumettant le mélange de diastéréoisomères de bis-[1-phospha-2,3-diphényl-4,5-diméthylnorbornadiène] à une réaction d'oxydation les transformant ainsi en dioxyde de bis-[1-phospha-2,3-diphényl-4,5-diméthylnorbornadiène].

3. Procédé selon la revendication 2 **caractérisé par le fait qu'**il consiste à oxyder le mélange de diastéréoisomères de bis-[1-phospha-2,3-diphényl-4,5-diméthylnorbornadiène], à l'aide d'un agent oxydant, de préférence, le peroxyde d'hydrogène.

4. Procédé selon l'une des revendications 2 et 3 **caractérisé par le fait que** l'on sépare les deux diastéréoisomères (IXm) et (IXr) par chromatographie liquide sur colonne, de préférence support en silice permettant d'obtenir d'une part le dioxyde de diphosphine sous forme méso (IXm) et le dioxyde de diphosphine sous forme racémique (IXr).

5. Procédé de préparation d'une diphosphine optiquement active de formule (Ia) ou (Ib) :

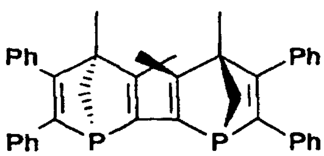

(Ia) - (S,S) - (+)

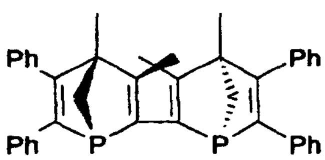

(Ib) - (R,R) - (-)

à partir du diastéréoisomère (IXr) obtenu selon l'une des revendications 1 à 4 **caractérisé par le fait qu'**il consiste :

- à effectuer le dédoublement du dioxyde de diphosphine sous forme racémique (IXr),
- puis à effectuer séparément la réduction des énantiomères (IXa) ou (IXb) de dioxyde de diphosphine.

6. Procédé selon la revendication 5 **caractérisé par le fait que** le dédoublement de (IXr) est effectué par chromatographie liquide chirale, sur colonne Chiralcel OJ®, Chirose C1 ou C3®, Chirosebond C1 ou C3®.

7. Procédé de préparation d'une diphosphine optiquement active de formule (Ia) ou (Ib) à partir du diastéréoisomère (IXr) obtenu selon l'une des revendications 1 à 4 **caractérisé par le fait qu'**il consiste :

- à effectuer la réduction du dioxyde de diphosphine sous forme racémique (IXr), conduisant à la diphosphine sous forme racémique (Ir),
- à effectuer le dédoublement de la diphosphine sous forme racémique (Ir).

8. Procédé selon l'une des revendications 5 et 7 **caractérisé par le fait que** la réduction est effectuée par le trichlorosilane, l'hexachlorodisilazane, le phényltrisilane, un hydrure notamment $LiAlH_4$ ou $NaBH_4$.

9. Procédé selon la revendication 8 **caractérisé par le fait que** l'on ajoute une base, de préférence une amine tertiaire et, plus préférentiellement, une picoline, la pyridine, la 2-éthylpyridine, la 4-éthylpyridine, la 2-méthylpyridine, la 4-méthylpyridine, la 2,6-diméthylpyridine, l'imidazole, la 1-méthylimidazole, la TMEDA (trétraméthylènediamine), la N-méthylpyrrolidine, la 4-méthylmorpholine, la triéthylamine, la DBU (1,8-diazabicyclo[5.4;0.]undécène-7).

10. Procédé selon la revendication 7 **caractérisé par le fait qu'**il consiste à effectuer le dédoublement du mélange racémique (Ir) de bis-[1-phospha-2,3-diphényl-4,5-diméthylnorbornadiène] en le faisant réagir avec un complexe de palladium et/ou de platine comme auxiliaire chiral, dans un solvant organique formant ainsi des complexes diastéréoisomères, puis à dédoubler lesdits complexes optiquement purs.

11. Procédé selon la revendication 10 **caractérisé par le fait que** l'auxiliaire chiral répond à la formule générale (VII) :

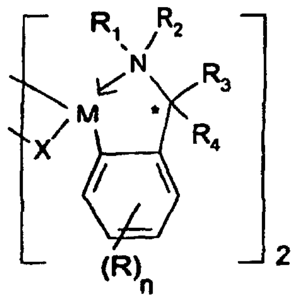

(VII)

dans ladite formule :

- M représente le palladium et/ou le platine,
- $R_1$, $R_2$, $R_3$ et $R_4$ représentent un atome d'hydrogène ou un radical alkyle ayant de 1 à 10 atomes de carbone ou un radical cycloalkyle ayant de 3 à 10 atomes de carbone,
- $R_3$ et $R_4$ sont différents et au moins l'un des deux représente un atome d'hydrogène,
- R a la signification donnée pour $R_1$, $R_2$, $R_3$ et $R_4$,
- X représente un atome d'halogène,
- n est un nombre de 0 à 4,
- lorsque n est supérieur à 1, deux radicaux R et les 2 atomes successifs du cycle benzénique peuvent former entre eux, un cycle ayant de 5 à 7 atomes de carbone.

12. Procédé selon l'une des revendications 10 et 11 **caractérisé par le fait que** l'auxiliaire chiral répond à la formule générale (VII) dans laquelle $R_1$, $R_2$, $R_3$ et $R_4$ représentent un atome d'hydrogène ou un radical méthyle, X représente un atome de chlore et n est égal à 0.

13. Procédé selon l'une des revendications 10 à 12 **caractérisé par le fait que** l'auxiliaire chiral répond à la formule générale (VII) dans laquelle $R_1$, $R_2$, $R_3$ et $R_4$ représentent un atome d'hydrogène ou un radical méthyle, X représente un atome de chlore et lorsque n est égal à 2, deux radicaux R forment un cycle benzénique.

14. Procédé selon l'une des revendications 10 à 13 **caractérisé par le fait que** l'auxiliaire chiral répond à la formule générale (VII') :

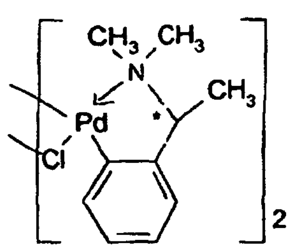

(VII')

**15.** Procédé selon l'une des revendications 10 à 14 **caractérisé par le fait que** l'on effectue la séparation des deux énantiomères par chromatographie liquide sur colonne, avec, de préférence un support en silice.

**16.** Procédé selon la revendication 10 **caractérisé par le fait que** l'on récupère les deux énantiomères des diphosphines purs en effectuant la solubilisation des complexes dans un solvant organique tel que, par exemple, le dichlorométhane, puis la décomplexation à l'aide d'un sel de l'acide cyanhydrique, de préférence, un sel alcalin et encore plus préférentiellement le sodium.

**17.** Procédé selon la revendication 1 **caractérisé par le fait qu'**il consiste à effectuer la séparation des diastéréoisomères de disulfure de bis-[1-phospha-2,3-diphényl-4,5-diméthylnorbornadiène] obtenus en faisant réagir le mélange de diastéréoisomères de bis-[1-phospha-2,3-diphènyl-4,5-diméthylnorbornadiène] avec le soufre conduisant à un mélange de diastéréoisomères de disulfure de bis-[1-phospha-2,3-diphényl-4,5-diméthylnorbornadiène].

**18.** Procédé de préparation d'une diphosphine optiquement active de formule (Ia) ou (Ib) à partir du diastéréoisomère (IX'r) obtenu selon la revendication 17 **caractérisé par le fait qu'**il consiste à effectuer le dédoublement du mélange racémique de disulfures de diphosphine (IX'r) de préférence, sur colonne chirale puis à réduire les énantiomères de disulfures de diphosphines (IX'a) et (IX'b) en énantiomères de diphosphines (Ia) et (Ib).

**19.** Procédé de préparation d'une diphosphine optiquement active de formule (Ia) ou (Ib) à partir du diastéréoisomère (IX'r) obtenu selon la revendication 17 **caractérisé par le fait qu'**il consiste à réduire le mélange racémique de disulfures de diphosphines (IX'r) en mélange racémique de diphosphines (Ir) puis à effectuer le dédoublement du mélange racémique de diphosphines en énantiomères (Ia) et (Ib).

**20.** Procédé selon l'une des revendications 18 et 19 **caractérisé par le fait que** la réduction des disulfures de diphosphines se fait par réaction avec un réactif-phosphore de type $PBu_3$ ou $P(CH_2CH_2CN)_3$.

**21.** Procédé de préparation d'une diphosphine optiquement active de formule (Ia) ou (Ib) à partir du diastéréoisomère (IX'r) obtenu selon la revendication 17 **caractérisé par le fait qu'**il consiste à transformer le mélange racémique de disulfures de diphosphines (IX'r) en mélange racémique de dioxydes de diphosphines (IXr) puis à obtenir les diphosphines optiquement actives (Ia) et (Ib) selon l'une des revendications 2 à 16.

**22.** Procédé selon la revendication 21 **caractérisé par le fait que** la transformation des disulfures de diphosphines, en dioxydes de diphosphines est effectuée par réaction des disulfures de diphosphines avec l'oxyde de cyclohexène, dans l'acide trifluoroacétique et en milieu solvant organique.

**23.** Dioxyde ou disulfure de bis-[1-phospha-2,3-diphényl-4,5-diméthylnorbornadiène] répondant aux formules suivantes :

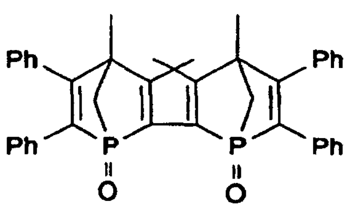
(IX)

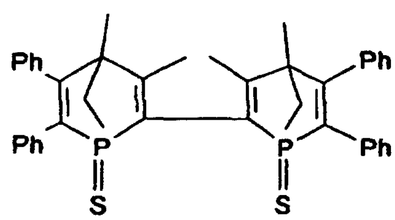
(IX')

()

**24.** Dioxyde de diphosphine de bis-[1-phospha-2,3-diphényl-4,5-diméthylnorbornadiène] sous forme optiquement active répondant aux formules suivantes :

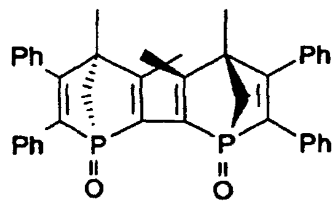 (IXa) 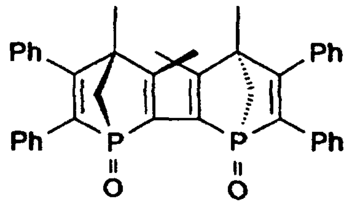 (IXb)

et sous forme méso :

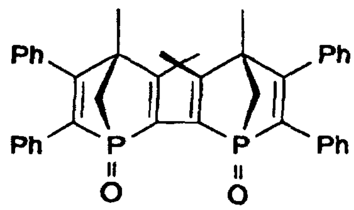 (IXm)

et sous forme racémique :

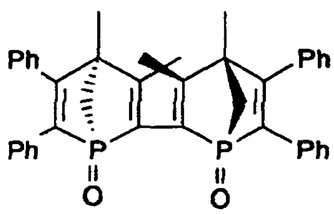 + 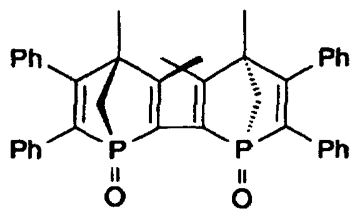 (IXr)

**25.** Disulfure de bis-[1-phospha-2,3-diphényl-4,5-diméthylnorbornadiène] sous forme optiquement active répondant aux formules suivantes :

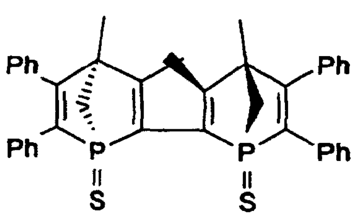 (IX'a) 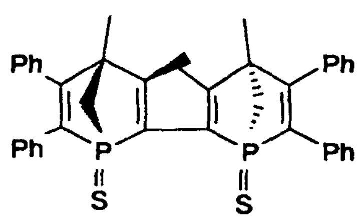 (IX'b)

sous forme méso :

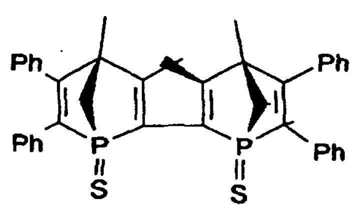 (IX'm)

sous forme racémique :

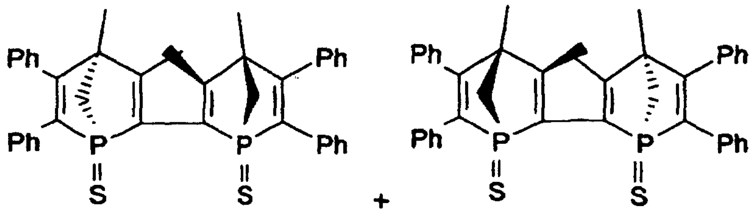

(IX'r)

**Patentansprüche**

1. Verfahren zur Auftrennung von Diastereoisomeren des Bis-[1-phospha-2,3-diphenyl-4,5-dimethylnorbornadiens] in die racemische Mischung (*d/l*) einerseits und in die *meso*-Verbindung andererseits, **dadurch gekennzeichnet, daß** man die Mischung der Diastereoisomere des Bis-[1-phospha-2,3-diphenyl-4,5-dimethylnorbomadiens], welche

   - die racemische Mischung (*d/l*) gemäß den Formeln:

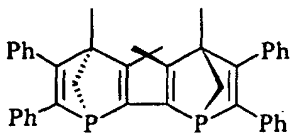

(Ia)

und

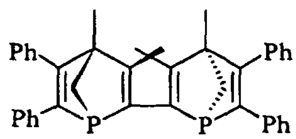

(Ib)

   - und die meso-Verbindung gemäß der folgenden Formel:

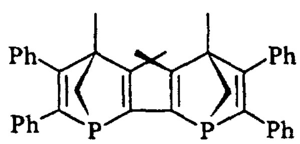

(Im)

   umfaßt,
   zu einer Mischung der Diastereoisomere des Disulfids oder des Dioxids des entsprechenden Diphosphins umsetzt,

   - dann die beiden Diastereoisomere in Form des Dioxids

     • einerseits in die Verbindung der *meso*-Form der Formel:

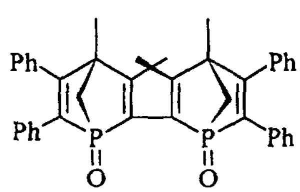

(IXm)

     • andererseits in die racemische Mischung der Formel:

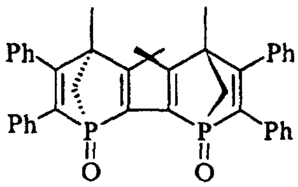 + 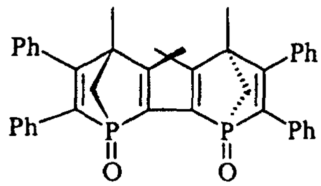 (IXr)

auftrennt,

- oder die beiden Diastereoisomere in Form des Disulfids
  - einerseits in die Verbindung der *meso*-Form der Formel:

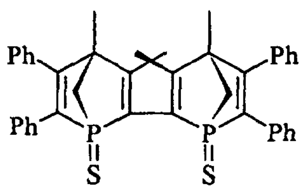 (IX'm)

  - andererseits in die racemische Mischung der Formel:

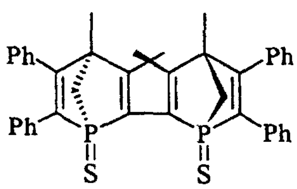 + 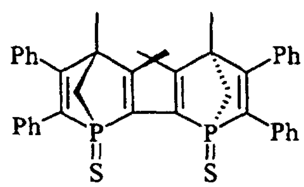 (IX'r)

auftrennt.

**2.** Verfahren nach Anspruch 1, **dadurch gekennzeichnet, daß** man die Trennung der Diastereoisomere des Dioxids des Bis-[1-phospha-2,3-diphenyl-4,5-dimethylnorbomadiens], die man erhält, indem man die Mischung der Diastereoisomere des Bis-[1-phospha-2,3-diphenyl-4,5-dimethylnorbornadiens] einer Oxidationsreaktion unterwirft, welche diese somit zu dem Dioxid des Bis-[1-phospha-2,3-diphenyl-4,5-dimethylnorbomadiens] umsetzt, durchführt.

**3.** Verfahren nach Anspruch 2, **dadurch gekennzeichnet, daß** man die Mischung der Diastereoisomere des Bis-[1-phospha-2,3-diphenyl-4,5-dimethylnorbornadiens] mit Hilfe eines Oxidationsmittels, vorzugsweise Wasserstoffperoxid, oxidiert.

**4.** Verfahren nach einem der Ansprüche 2 und 3, **dadurch gekennzeichnet, daß** man die beiden Diastereoisomere (IXm) und (IXr) mittels Flüssigchromatographie an einer Säule, vorzugsweise mit einem Kieselsäureträger, trennt, so daß man einerseits das Dioxid des Diphosphins in der *meso*-Form (IXm) und andererseits das Dioxid des Diphosphins in der racemischen Form (IXr) erhält.

**5.** Verfahren zur Herstellung eines optisch aktiven Diphosphins der Formel (Ia) oder (Ib):

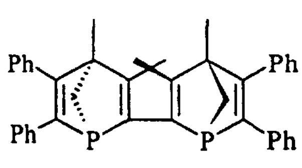 (Ia) - (S,S) - (+)

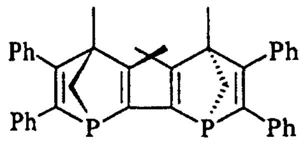

(Ib) - (R,R) - (-)

ausgehend von dem nach einem der Ansprüche 1 bis 4 erhaltenen Diastereoisomer (IXr), **dadurch gekennzeichnet, daß** man

- die Spaltung des Dioxids des in racemischer Form (IXr) vorliegenden Diphosphins durchführt,
- dann getrennt die Reduktion der Enantiomere (IXa) oder (IXb) des Dioxids des Diphosphins durchführt.

**6.** Verfahren nach Anspruch 5, **dadurch gekennzeichnet, daß** man die Spaltung von (IXr) mittels chiraler Flüssigchromatographie an einer Säule vom Typ Chiralcel OJ®, Chirose C1 oder C3® oder Chirosebond C1 oder C3® durchführt.

**7.** Verfahren zur Herstellung eines optisch aktiven Diphosphins der Formel (Ia) oder (Ib) ausgehend von dem nach einem der Ansprüche 1 bis 4 erhaltenen Diastereoisomer (IXr), **dadurch gekennzeichnet, daß** man

- die Reduktion des Dioxids des in racemischer Form (IXr) vorliegenden Diphosphins durchführt, die zum Diphosphin in racemischer Form (Ir) führt,
- die Spaltung des in racemischer Form (Ir) vorliegenden Diphosphins durchführt.

**8.** Verfahren nach einem der Ansprüche 5 und 7, **dadurch gekennzeichnet, daß** man die Reduktion mit Hilfe von Trichlorsilan, Hexachlordisilazan, Phenyltrisilan, einem Hydrid, insbesondere $LiAlH_4$ oder $NaBH_4$, durchführt.

**9.** Verfahren nach Anspruch 8, **dadurch gekennzeichnet, daß** man eine Base zugibt, vorzugsweise ein tertiäres Amin, besonders bevorzugt ein Picolin, Pyridin, 2-Ethylpyridin. 4-Ethylpyridin, 2-Methylpyridin, 4-Methylpyridin, 2,6-Dimethylpyridin, Imidazol, 1-Methylimidazol, TMEDA (Tetramethylendiamin), N-Methylpyrrolidin, 4-Methylmorpholin, Triethylamin und DBU (1,8-Diazabicyclo[5.4.0]undec-7-en).

**10.** Verfahren nach Anspruch 7, **dadurch gekennzeichnet, daß** man die Spaltung der racemischen Mischung (Ir) des Bis-[1-phospha-2,3-diphenyl-4,5-dimethylnorbornadiens] durchführt, indem man es mit einem Palladiumund/oder einem Platinkomplex als chirales Hilfsmittel in einem organischen Lösemittel reagieren läßt, um so diastereoisomere Komplexe zu bilden, dann die optisch reinen Komplexe spaltet.

**11.** Verfahren nach Anspruch 10, **dadurch gekennzeichnet, daß** das chirale Hilfsmittel der allgemeinen Formel (VII) entspricht:

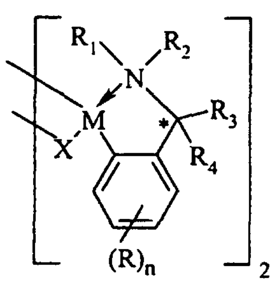

(VII)

wobei in der genannten Formel:

- M Palladium und/oder Platin darstellt,

- $R_1$, $R_2$, $R_3$ und $R_4$ ein Wasserstoffatom oder einen Alkylrest mit 1 bis 10 Kohlenstoffatomen oder einen Cycloalkylrest mit 3 bis 10 Kohlenstoffatomen darstellen,
- $R_3$ und $R_4$ verschieden sind und mindestens einer dieser beiden Reste ein Wasserstoffatom darstellt,
- R die für $R_1$, $R_2$, $R_3$ und $R_4$ angegebene Bedeutung hat,
- X ein Halogenatom darstellt,
- n eine Zahl von 0 bis 4 ist,
- wenn n größer als 1 ist, zwei Reste R und die 2 aufeinanderfolgenden Atome des Benzolrings untereinander einen Ring mit 5 bis 7 Kohlenstoffatomen bilden können.

**12.** Verfahren nach einem der Ansprüche 10 und 11, **dadurch gekennzeichnet, daß** das chirale Hilfsmittel der allgemeinen Formel (VII) entspricht, in der $R_1$, $R_2$, $R_3$ und $R_4$ ein Wasserstoffatom oder einen Methylrest darstellen, X ein Chloratom darstellt und n gleich 0 ist.

**13.** Verfahren nach einem der Ansprüche 10 bis 12, **dadurch gekennzeichnet, daß** das chirale Hilfsmittel der allgemeinen Formel (VII) entspricht, in der $R_1$, $R_2$, $R_3$ und $R_4$ ein Wasserstoffatom oder einen Methylrest darstellen, X ein Chloratom darstellt und, wenn n gleich 2 ist, zwei Reste R einen Benzolring bilden.

**14.** Verfahren nach einem der Ansprüche 10 bis 13, **dadurch gekennzeichnet, daß** das chirale Hilfsmittel der allgemeinen Formel (VII') entspricht:

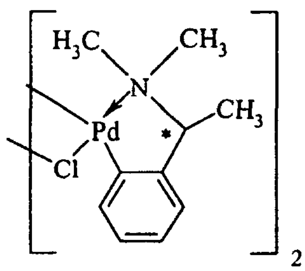

(VII')

**15.** Verfahren nach einem der Ansprüche 10 bis 14, **dadurch gekennzeichnet, daß** man die Trennung der beiden Enantiomere mittels Flüssigchromatographie an einer Säule, vorzugsweise mit einem Kieselsäureträger, durchführt.

**16.** Verfahren nach Anspruch 10, **dadurch gekennzeichnet, daß** man die beiden Enantiomere der reinen Diphosphine erhält, indem man die Solubilisierung der Komplexe in einem organischen Lösemittel, wie zum Beispiel Dichlormethan, und dann die Dekomplexierung mit Hilfe eines Salzes der Blausäure, vorzugsweise eines alkalischen Salzes und besonders bevorzugt eines Natriumsalzes, durchführt.

**17.** Verfahren nach Anspruch 1, **dadurch gekennzeichnet, daß** man die Trennung der Diastereoisomere des Disulfids des Bis-[1-phospha-2,3-diphenyl-4,5-dimethylnorbomadiens] durchführt, die durch Reaktion der Mischung der Diastereoisomere des Bis-[1-phospha-2,3-diphenyl-4,5-dimethylnorbornadiens] mit Schwefel erhalten werden, wobei diese Reaktion zu einer Mischung aus Diastereoisomeren des Disulfids des Bis-[1-phospha-2,3-diphenyl-4,5-dimethylnorbomadiens] führt.

**18.** Verfahren zur Herstellung eines optisch aktiven Diphosphins der Formel (Ia) oder (Ib) ausgehend von dem nach Anspruch 17 erhaltenen Diastereoisomer (IX'r), **dadurch gekennzeichnet, daß** man die Spaltung der racemischen Mischung des Disulfids des Diphosphins (IX'r) vorzugsweise an einer chiralen Säule durchführt, dann die Enantiomere des Disulfids des Diphosphins (IX'a) und (IX'b) zu den Enantiomeren des Diphosphins (Ia) und (Ib) reduziert.

**19.** Verfahren zur Herstellung eines optisch aktiven Diphosphins der Formel (Ia) oder (Ib) ausgehend von dem nach Anspruch 17 erhaltenen Diastereoisomer (IX'r), **dadurch gekennzeichnet, daß** man die Mischung der Disulfide der Diphosphine (IX'r) zu einer racemischen Mischung aus Diphosphinen (Ir) reduziert, dann die racemische Mischung der Diphosphine in die Enantiomere (Ia) und (Ib) spaltet.

**20.** Verfahren nach einem der Ansprüche 18 und 19, **dadurch gekennzeichnet, daß** die Reduktion der Disulfide der Diphosphine durch eine Reaktion mit einem phosphorhaltigen Reagenz vom Typ $PBu_3$ oder $P(CH_2CH_2CN)_3$ durchgeführt wird.

**21.** Verfahren zur Herstellung eines optisch aktiven Diphosphins der Formel (Ia) oder (Ib) ausgehend von dem nach Anspruch 17 erhaltenen Diastereoisomer (IX'r), **dadurch gekennzeichnet, daß** man die racemische Mischung der Disulfide der Diphosphine (IX'r) zu einer racemischen Mischung der Dioxide der Diphosphine (IXr) umsetzt, dann die optisch aktiven Diphosphine (Ia) und (Ib) nach einem der Ansprüche 2 bis 16 erhält.

**22.** Verfahren nach Anspruch 21, **dadurch gekennzeichnet, daß** die Umsetzung der Disulfide der Diphosphine zu Dioxiden der Diphosphine durch Reaktion der Disulfide der Diphosphine mit Cyclohexenoxid in Trifluoressigsäure und in einem organischen Lösemittelmilieu durchgeführt wird.

**23.** Dioxid oder Disulfid von Bis-[1-phospha-2,3-diphenyl-4,5-dimethylnorbornadien] der folgenden Formeln:

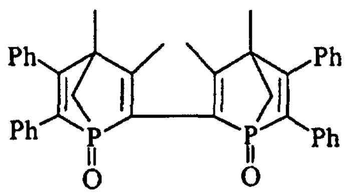 (IX) 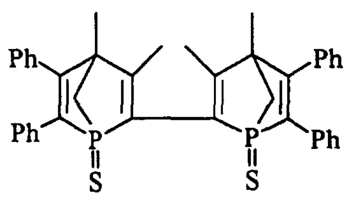 (IX')

**24.** Dioxid des Diphosphins von Bis-[1-phospha-2,3-diphenyl-4,5-dimethylnorbornadien] in der optisch aktiven Form gemäß den folgenden Formeln:

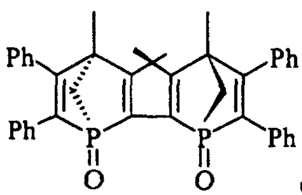 (IXa) 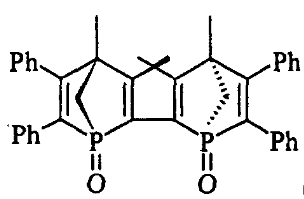 (IXb)

und in der *meso*-Form:

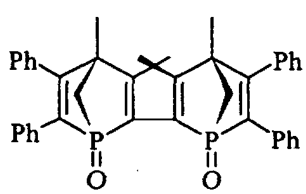 (IXm)

und in der racemischen Form:

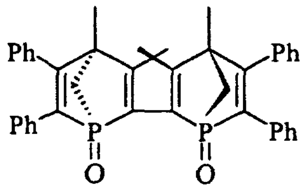
+
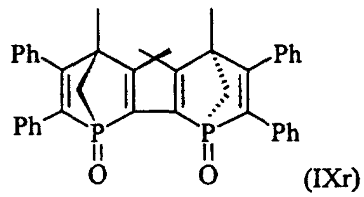
(IXr)

25. Disulfid von Bis-[ 1-phospha-2,3-diphenyl-4,5-dimethylnorbornadien] in der optisch aktiven Form gemäß den folgenden Formeln:

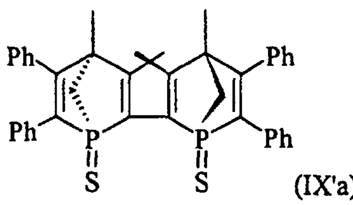
(IX'a)
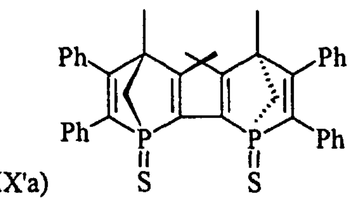
(IX'b)

und in der *meso*-Form:

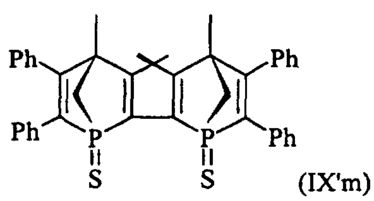
(IX'm)

und in der racemischen Form:

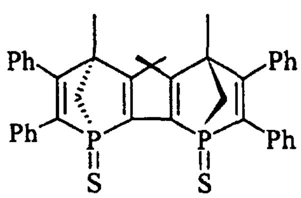
+
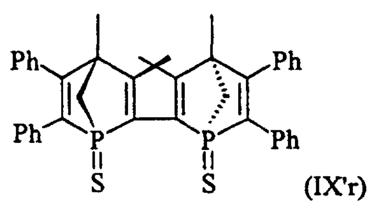
(IX'r)

## Claims

1. Process for the separation of diastereoisomers, on the one hand the racemic mixture (*d/l*), and on the other hand the(*meso*)-compound of bis-[1-phospha-2,3-diphenyl-4,5-dimethyl norbornadiene] **characterized in that** it consists of converting the mixture of bis-[1-phospha-2,3-diphenyl-4,5-dimethyl norbornadiene] diastereoisomers comprising:

- the racemic mixture (*d/l*) corresponding to the formulae:

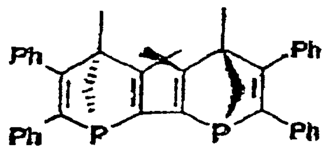

(Ia) and

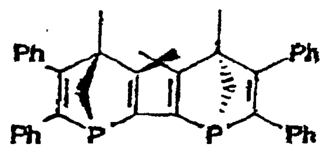

(Ib)

- and the (*meso*)-compound corresponding to the following formula:

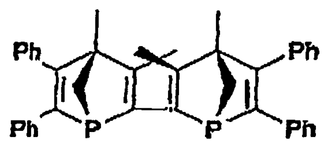

(Im)

to a mixture of disulphide or dioxide diastereoisomers of the corresponding diphosphine,

- then separating the two diastereoisomers in dioxide form,
  - on the one hand the compound in *(meso)* form of formula:

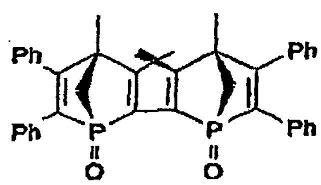

(IXm)

  - on the other hand the racemic mixture of formula:

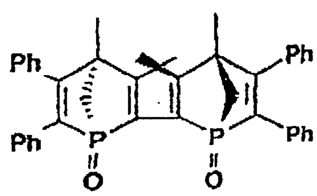

\+

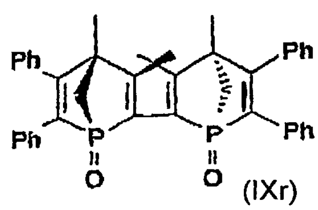

(IXr)

- or separating the two diastereoisomers in disulphide form,
  - on the one hand the compound in *(meso)* form of formula:

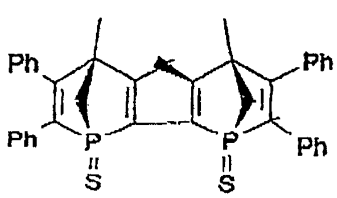

(IX'm)

  - on the other hand the racemic mixture of formula:

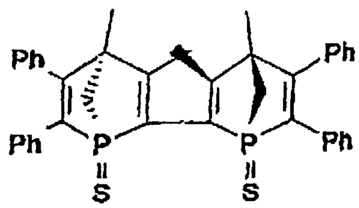

+

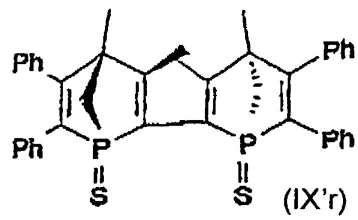

(IX'r)

2. Process according to claim 1 **characterized in that** the separation of the bis-[1-phospha-2,3-diphenyl-4,5-dimethyl norbornadiene] dioxide diastereoisomers obtained is carried out by subjecting the mixture of bis-[1-phospha-2,3-diphenyl-4,5-dimethyl norbornadiene] diastereoisomers to an oxidation reaction, in this way converting them to bis-[1-phospha-2,3-diphenyl-4,5-dimethyl norbornadiene] dioxide.

3. Process according to claim 2 **characterized in that** it consists of oxidizing the mixture of bis-[1-phospha-2,3-diphenyl-4,5-dimethyl norbornadiene] diastereoisomers using an oxidizing agent, preferably hydrogen peroxide.

4. Process according to claims 2 and 3 **characterized in that** the two diastereoisomers (IXm) and (IXr) are separated by liquid chromatography on a column, preferably a silica support making it possible to obtain on the one hand diphosphine dioxide in meso form (IMx) and diphosphine dioxide in racemic form (IXr).

5. Process for the preparation of an optically active diphosphine of formula (Ia) or (Ib):

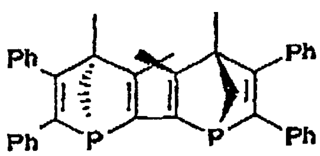

(Ia) – (S,S) – (+)

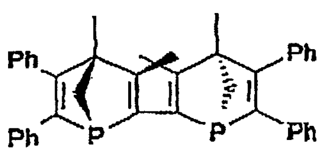

(Ib) – (R,R) – (-)

starting from the diastereoisomer (IXr) obtained according to one of claims 1 to 4 **characterized in that** it consists of:

- carrying out the resolution of the diphosphine dioxide in racemic form (IXr),
- then separately carrying out the reduction of the diphosphine dioxide enantiomers (IXa) or (IXb).

6. Process according to claim 5 **characterized in that** the resolution of (IXr) is carried out by chiral liquid chromatography on a Chiralcel OJ®, Chirose C1 or C3®, Chirosebond C1 or C3® column.

7. Process for the preparation of an optically active diphosphine of formula (Ia) or (Ib) starting from the diastereoisomer (IXr) obtained according to one of claims 1 to 4, **characterized in that** it consists of:

- carrying out the reduction of the diphosphine dioxide in racemic form (IXr) leading to the diphosphine in racemic form (Ir),
- carrying out the resolution of the diphosphine in racemic form (Ir).

8. Process according to one of claims 5 and 7, **characterized in that** the reduction is carried out by trichlorosilane, hexachlorodisilazane, phenyl trisilane, a hydride in particular $LiAlH_4$ or $NaBH_4$.

**9.** Process according to claim 8 **characterized in that** a base is added, preferably a tertiary amine and, more preferably, a picoline, pyridine, 2-ethyl pyridine, 4-ethyl pyridine, 2-methyl pyridine, 4-methyl pyridine, 2,6-dimethyl pyridine, imidazole, 1-methyl imidazole, TMEDA (tetramethylene diamine), N-methyl pyrrolidine, 4-methyl morpholine, triethyl amine, DBU 1,8-diazabicyclo[5.4.0.]undecene-7).

**10.** Process according to claim 7 **characterized in that** it consists of carrying out the resolution of the racemic mixture (Ir) of bis-[1-phospha-2,3-diphenyl-4,5-dimethyl norbornadiene] by reacting it with a palladium and/or platinum complex as chiral auxiliary, in an organic solvent thus forming diastereoisomer complexes, then resolving said optically pure complexes.

**11.** Process according to claim 10 **characterized in that** the chiral auxiliary corresponds to the general formula (VII):

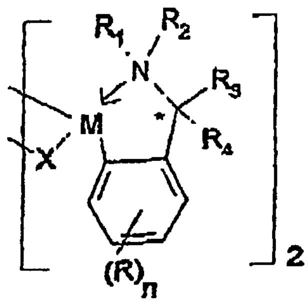

(VII)

in said formula:

- M represents palladium and/or platinum,
- $R_1$, $R_2$, $R_3$ and $R_4$ represent a hydrogen atom or an alkyl radical having 1 to 10 carbon atoms or a cycloalkyl radical having 3 to 10 carbon atoms,
- $R_3$ and $R_4$ are different and at least one of the two represents a hydrogen atom,
- R has the meaning given for $R_1$, $R_2$, $R_3$ and $R_4$,
- X represents a halogen atom,
- n is a number from 0 to 4,
- when n is greater than 1, two R radicals and the 2 successive atoms of the benzene ring can form, between themselves, a ring having 5 to 7 carbon atoms.

**12.** Process according to one of claims 10 and 11 **characterized in that** the chiral auxiliary corresponds to the general formula (VII) in which $R_1$, $R_2$, $R_3$ and $R_4$ represent a hydrogen atom or a methyl radical, X represents a chlorine atom and n is equal to 0.

**13.** Process according to one of claims 10 to 12 **characterized in that** the chiral auxiliary corresponds to the general formula (VII) in which $R_1$, $R_2$, $R_3$ and $R_4$ represent a hydrogen atom or a methyl radical, X represents a chlorine atom and when n is equal to 2, two R radicals form a benzene ring.

**14.** Process according to one of claims 10 to 13, **characterized in that** the chiral auxiliary corresponds to the general formula (VII'):

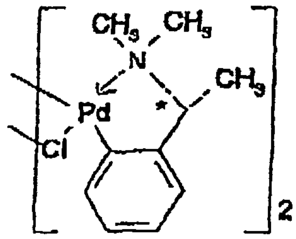

(VII')

**15.** Process according to one of claims 10 to 14 **characterized in that** the separation of the two enantiomers is carried out by liquid chromatography on a column, with, preferably, a silica support.

**16.** Process according to claim 10 **characterized in that** the two pure diphosphine enantiomers are recovered by carrying out the solubilization of the complexes in an organic solvent such as, for example, dichloromethane, then the decomplexation using a hydrocyanic acid salt, preferably an alkaline salt and still more preferably sodium.

**17.** Process according to claim 1 **characterized in that** it consists of carrying out the separation of the bis-[1-phospha-2,3-diphenyl-4,5-dimethyl norbornadiene] disulphide diastereoisomers obtained by reacting the mixture of bis-[1-phospha-2,3-diphenyl-4,5-dimethyl norbornadiene] diastereoisomers with sulphur leading to a mixture of bis-[1-phospha-2,3-diphenyl-4,5-dimethyl norbornadiene] disulphide diastereoisomers.

**18.** Process for the preparation of an optically active diphosphine of formula (Ia) or (Ib) starting from the diastereoisomer (IX'r) obtained according to claim 17 **characterized in that** it consists of carrying out the resolution of the preferred racemic mixture of diphosphine disulphides (IX'r) on a chiral column, then reducing the diphospine disulphide enantiomers (IX'a) and (IX'b) to diphosphine enantiomers (Ia) and (Ib).

**19.** Process for the preparation of an optically active diphosphine of formula (Ia) or (Ib) starting from the diastereoisomer (IX'r) obtained according to claim 17 **characterized in that** it consists of reducing the racemic mixture of diphosphine disulphides (IX'r) to a racemic mixture of diphosphines (Ir) then resolving the racemic mixture of diphosphines to enantiomers (Ia) and (Ib).

**20.** Process according to one of claims 18 and 19 **characterized in that** the reduction of the diphosphine disulphides is carried out by reaction with a phosphorated reagent of $Pbu_3$ or $P(CH_2CH_2CN)_3$ type.

**21.** Process for the preparation of an optically active diphosphine of formula (Ia) or (Ib) starting with the diastereoisomer (IX'r) obtained according to claim 17 **characterized in that** it consists of converting the racemic mixture of diphosphine sulphides (IX'r) to a racemic mixture of diphosphine dioxides (IXr) then obtaining the optically active diphosphines (Ia) or (Ib) according to one of claims 2 to 16.

**22.** Process according to claim 21 **characterized in that** the conversion of the diphosphine disulphides to diphosphine dioxides is carried out by reaction of the diphosphine disulphides with cyclohexene oxide, in trifluoroacetic acid and in an organic solvent medium.

**23.** Bis-[1-phospha-2,3-diphenyl-4,5-dimethyl norbornadiene] dioxide or disulphide corresponding to the following formulae:

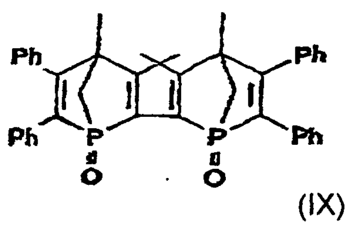

(IX)

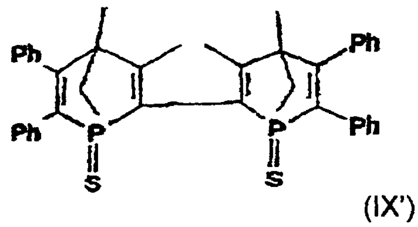

(IX')

**24.** Bis-[1-phospha-2,3-diphenyl-4,5-dimethyl norbornadiene] diphosphine dioxide in optically active form corresponding to the following formulae:

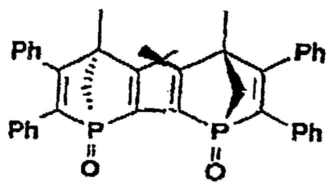

(IXa)

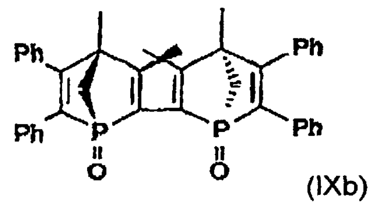

(IXb)

and in meso form:

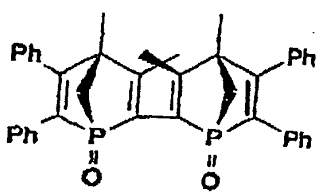

(IXm)

and in racemic form:

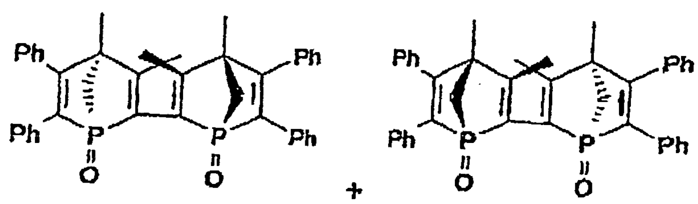

(IXr)

**25.** Bis-[1-phospha-2,3-diphenyl-4,5-dimethyl norbornadiene] disulphide in optically active form corresponding to the following formulae:

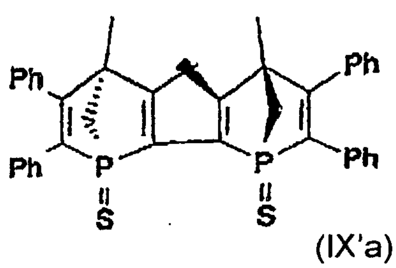

(IX'a)

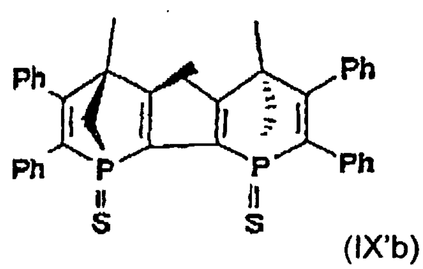

(IX'b)

in meso form:

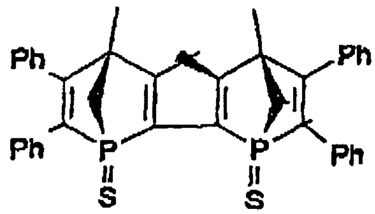

(IX'm)

in racemic form:

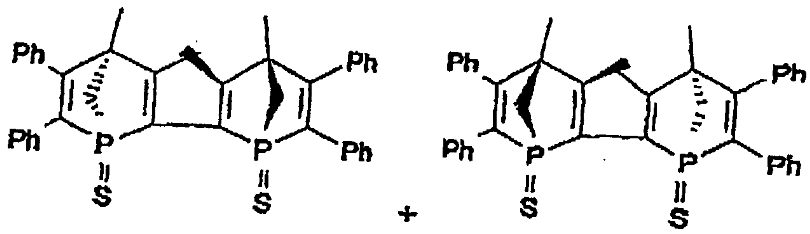

(IX'r)